# EUROPÄISCHE PATENTSCHRIFT

(11) **EP 0 355 491 B1**
(45) Veröffentlichungstag und Bekanntmachung des Hinweises auf die Patenterteilung: **24.11.1993**
(21) Anmeldenummer: 89114157.4
(22) Anmeldetag: 01.08.1989
(51) Int. Cl.: G01B 5/08

(54) **Messvorrichtung zur Messung der Durchmesser von Walzen bei Walzenschleifmaschinen**
Measuring device for measuring the diameter of cylinders of roll grinding machines
Dispositif de mesure pour mesurer le diamètre des cylindres des machines à rectifier

(30) Priorität: 19.08.1988 DE 3828181
(43) Veröffentlichungstag der Anmeldung: 28.02.1990
(73) Patentinhaber: J.M. Voith GmbH, D-89522 Heidenheim (DE)
(72) Erfinder: Eckhardt, Roland, D-7928 Giengen (DE)
(74) Vertreter: Weitzel, Wolfgang, Dr.-Ing.

(56) Entgegenhaltungen:
- EP-A- 0 023 003
- DE-A- 3 136 443
- FR-A- 2 113 645
- "Fertigungsmesstechnik", Hrsg, H.-J. Warnecke und W. Dutschke, Springer Verlag 1984, S. 448-455

## Beschreibung

Die Erfindung betrifft eine Meßvorrichtung entsprechend dem Oberbegriff des Patentanspruches 1.

Eine solche Meßvorrichtung ist bekannt aus der DE-PS 836 574. Hier bei ist eine Säule vorgesehen, an der ein Meßarm sowohl schwenkbar als auch in der Höhe verstellbar angeordnet ist. Zur Feststellung der Höheneinstellung im groben Maßstab trägt die Säule eine Skaleneinteilung bzw. ist ihr eine solche zugeordnet. Hierbei ist Voraussetzung, daß die Längsachsen der Walzen immer auf der gleichen Höhe liegen, weil nur ein einziger Meßarm vorhanden ist.

Ferner ist durch die DE-PS 15 02 422 eine Meßvorrichtung mit zwei Meßarmen bekannt, die an einer Verschiebeführung eines Querträgers verschieblich gehalten sind. Auch hier ist Voraussetzung eine immer gleiche Lage der Walzenlängsachsen.

Eine weitere Meßvorrichtung zur Messung der Durchmesser von Walzen ist bekannt aus "Fertigungmeßtechnik, Handbuch für Industrie und Wissenschaft" Springer-Verlag 1984, Seite 453. Gemäß Abbildung 7.346 dieser Veröffentlichung wird eine Meßanordnung mit zwei sich quer zum zu messenden Zylinder erstreckenden Haltearmen für Taster beschrieben, welche von oben bzw. unten an den zum zu messenden Zylinder erstreckenden Haltearmen für Zylinderumfang angesetzt werden. Die Haltearme sind dabei nicht veränderlich und es erfolgt eine Zustellung des Meßkopfes in Bezug auf den zu messenden Zylinder mittels Pneumatik- oder Hydraulikhubzylinder. Der eigentliche Meßkopf wird dabei durch Blattfedern gehalten, die sich parallel zu den Haltearmen erstrecken.

Die Aufgabe der Erfindung ist es, eine stabile Meßvorrichtung zur Messung auch großer Walzendurchmesser für beliebige Lagen der Walzenlängsachsen auzugeben.

Diese Aufgabe wird erfindungsgemäß bei einer Meßvorrinchtung der eingangs genaunten Art durch die Merkmale des Kennzeichnenden Teils des Patentanspruchs 1 gelöst. Eine besonders vorteilhafte Ausführungsform ergibt sich mit den Merkmalen des Anspruchs 2.

Nachfolgend wird die Erfindung anhand eines in den Figuren der Zeichnung dargestellten Ausführungsbeispiels erläutert.

Dabei stellt
- Figur 1: eine Ansicht in Querrichtung,
- Figur 2: eine Draufsicht,
- Figur 3: eine Ansicht in Längsrichtung und
- Figur 4: eine vergrößerte Ansicht in Längsrichtung von der anderen Seite (Meßträgerseite) her der Meßträgerantriebsvorrichtungen, teilweise im Querschnitt,
- Figur 5: eine Klemmvorrichtung in Draufsicht und
- Figur 6: einen entsprechenden Querschnitt der Klemmvorrichtung dar.

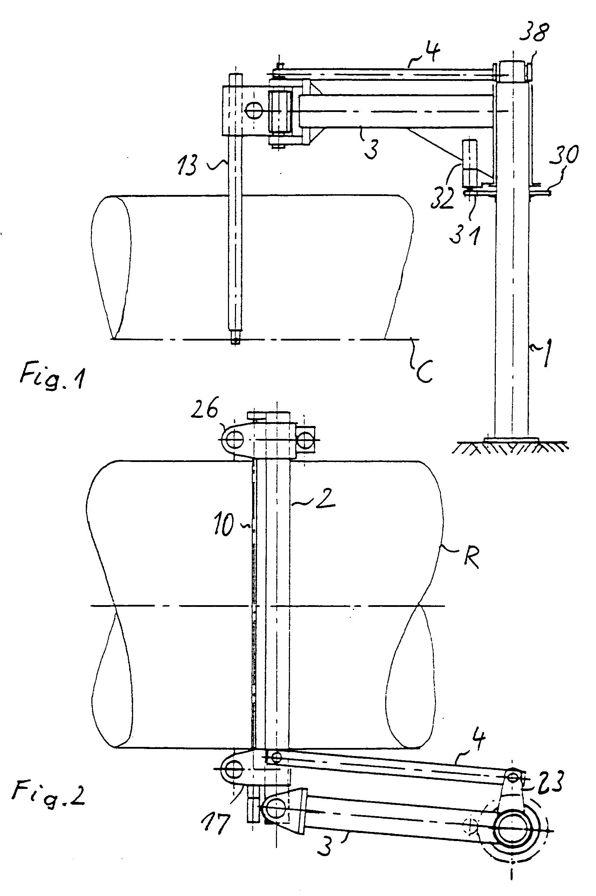

Die Meßvorrichtung besteht unter anderem, soweit es aus Fig. 1 und 2 hervorgeht, aus dem an der senkrechten Säule 1 gelagerten Kragarm 3 und Parallelarm 23 sowie dem am Parallelarm 23 gelagerten Führungsarm 4, dem Querträger 2 und den Meßträgerstäben 13 und 14, die parallel zur Säule 1 verlaufen. Die genannten Arme und der Querträger 2 bilden einen Parallel-Kurbeltrieb, wobei der Kragarm 3 mit einem Antrieb, insbesondere elektrischem Antriebsmotor 32, vorzugsweise über ein Zahnrad 30 und Ritzel 31 gekoppelt ist. Die in der Walzenschleifmaschine zu bearbeitende und zu vermessende Walze mit ihrer Mittelachse C ist mit R bezeichnet und hier nur im Ausschnitt dargestellt.

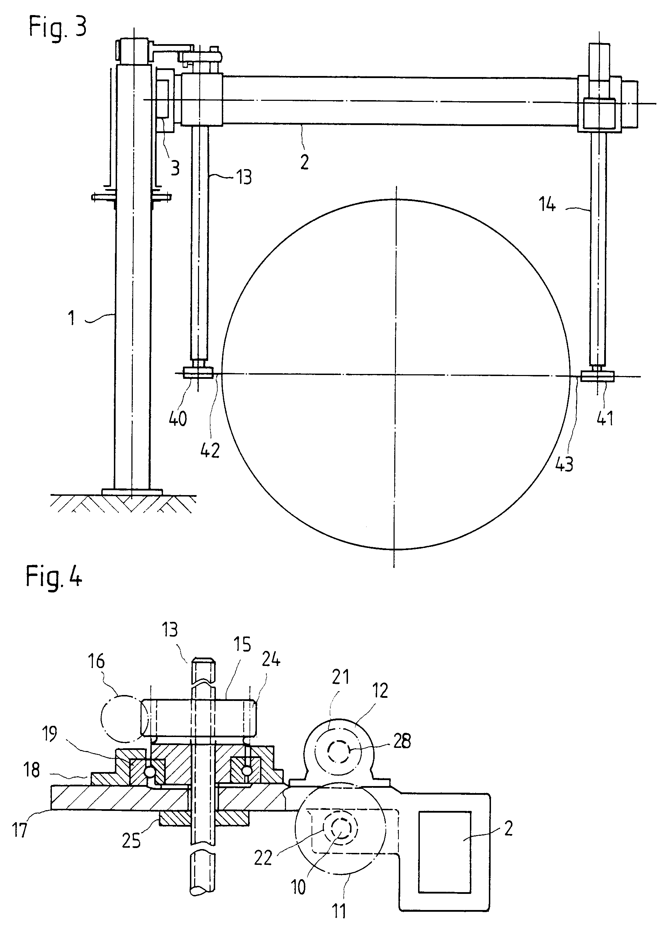

An den unteren Enden der Meßträgerstäbe 13 bzw. 14 sind die Meßvorrichtungen 40 und 41 mit den Meßtaststiften 42 und 43 befestigt,(Fig.3).

Die Meßträgerstäbe 13 und 14 sind zumindest an ihren oberen Enden als Gewindespindeln ausgeführt, so daß sie, wie später beschrieben wird, in der Vertikalen verstellt werden können. Werden sie ganz nach oben eingezogen, so kann ohne weiteres der Querträger 2 von der Walze mittels Motorantrieb 32 weggeschwenkt werden. Die Säule 1 kann noch entlang der Walzenachse C entsprechend der Meßeinrichtung nach der genannten DE-PS 836 574 verschoben werden, so daß für jeden Walzenabschnitt deren Durchmesser festgestellt werden kann. Der Parallelarm 23 ist nun mittels Drehlager 38 an der Säule 1 gelagert und kann mittels einer Festklemmvorrichtung auf dieser Säule insbesondere in der Meßposition bzw. in der dazu nötigen Ausgangsposition des Kragarms 3 festgeklemmt werden. Dies kann z.B. nach Art einer Bandbremse erfolgen, wobei vorzugsweise das Klemmband mittels Luftbalg gespannt wird.

Für den Meßvorgang wird der Kragarm 3 soweit geschwenkt, daß die Mittelachse des Parallelarmes 23 (d.h. die Verbindungsachse zwischen Säulen-Vertikalachse und Drehachse des Führungsarmes 4 im Parallelarm) senkrecht zur Walzenachse C steht. Dann wird der Parallelarm mittels der genannten Festklemmvorrichtung festgeklemmt und das weitere Anschwenken des Kragarmes 3, bis die Meßvorrichtung 40 des säulennahen Meßträgerstabes 13 in der Meßposition ist, folgt durch weitere Drehung des Kragarms 3 mittels seinem Motorantrieb 32. Dabei bleibt gewährleistet, daß sowohl Parallelarm 23 als insbesondere der Querträger 2 genau senkrecht zur Walzenachse C ausgerichtet bleiben. Es wirken also Kragarm 3, Parallelarm 23, Führungsarm 4 und Querträger 2 wie ein Parallelkurbeltrieb. Vorzugsweise ist der Antriebsmotor 32 ein elektronisch gesteuerter Schrittmotor.

Der säulenferne Meßträgerstab 14 wird nun mittels Drehantrieb horizontal angestellt, der aus mit Spindelgewinde 22 versehener Transportspindel 10, Getriebezahnrad 11 und damit kämmendem Ritzel 21, das von der Welle 28 eines elektrischen Motors 12 angetrieben ist, besteht (Fig.4). Neben diesem Antrieb trägt die Platte 17, die an dem Querträger 2 fest gelagert ist, auch noch den Antrieb für den säulennahen Meßträgerstab 13. Der entsprechende Antrieb für den säulenfernen Meßträgerstab 14 ist praktisch gleich ausgebildet. Eine der Trägerplatte 17 entsprechende Platte 26 ist auch auf dem anderen Ende des Querträgers 2 verschiebbar vorgesehen. Der Meßträgerstab 13 ist zumindest in seinem oberen Teil als Gewindespindel ausgebildet, so daß sie durch Drehung der Spindelmutter 15 bei Festlegung der Spindel in Drehrichtung, z.B. durch Nut und Feder, in vertikaler Richtung (parallel zur Säule 1) verfahren werden kann. Der Antrieb der Spindelmutter 15 erfolgt über deren Außenzahnkranz 24, dessen Zahnung einer Verzahnung eines Schneckenrades entspricht, in das das Schneckenrad 16 eingreift. Dieses Schneckenrad 16 sitzt auf der Welle eines hier nicht dargestellten elektrischen Antriebsmotors. Die Lagerung der Spindelmutter 15 erfolgt vorzugsweise über ein Schrägkugellager 19, das mittels Haltering 18 auf der Trägerplatte 17 befestigt ist. Ferner ist unterhalb der Trägerplatte 17 noch eine Lagerplatte 25 für die Spindel 13 vorgesehen.

Um möglichst große Spielfreiheit zu erreichen, ist es zu empfehlen, daß das Spindelgewinde jeweils ein Trapezgewinde ist.

Man hat den Vorteil, wenn man den Antriebsmotor 32 des Kragarms 3 als Schrittmotor ausführt, so daß man den Schwenkvorgang beim Einschwenken der Meßvorrichtung automatisieren kann, so daß das Einschwenken und Wegschwenken auf Knopfdruck vorgenommen werden kann. Das gleiche ist möglich, wenn man für die übrigen, in Fig. 4 dargestellten bzw. in deren Beschreibung dazu erwähnten Antriebe ebenfalls Schrittmotore vorsieht. Da man im allgemeinen heute für die Steuerung für die Walzenschleifmaschinen eine numerische, auf elektronischer Datenverarbeitung beruhende Steuerung anwendet, kann man alle diese Vorgänge ohne weiteres automatisieren.

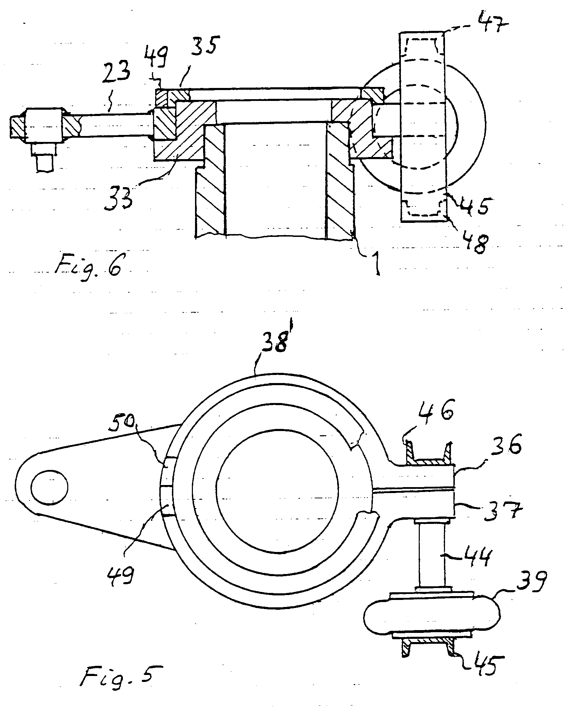

Die Festklemmvorrichtung zur Festklemmung des Parallelarms 23 ist in Figur 5 und 6 erläutert. Der Parallelarm 23 ist an einem Tragring 38′ befestigt, der zwei Flansche 36 und 37 aufweist, an welcher Stelle er geschlitzt ist. Mittels Druckarm 44 und aus U-Eisen bestehendem Spannrahmen 45, 46, 47 und 48 wird die Druckkraft eines hydraulischen Luftbalgs 39 dazu benutzt, um die Flansche 36 und 37 des Tragrings 38′ gegeneinander zu verspannen und somit den Tragring 38′ auf dem Lagerring 33, der an der Säule 1 befestigt ist, festzulegen. Anschläge 49, der an einem dem Lagerring 33 fest verbundenen Abschlußring 35 befestigt ist und 50, der an dem Klemmring 38′ befestigt ist, ermöglichen eine ganz genaue Positionierung sowohl von Parallelarm 23 und damit auch Kragarm 3, wobei dieser dann genau senkrecht zur Walzenlängsachse C ausgerichtet ist. Andere Klemmeinrichtungen sind natürlich auch möglich, wie schon weiter oben angedeutet wurde.

## Patentansprüche

1. Meßvorrichtung zur Messung der Durchmesser von Walzen in Walzenschleifmaschinen, wobei eine senkrechte Säule (1) einen um deren Längsachse schwenkbaren Kragarm (3) trägt,
dadurch gekennzeichnet,
daß der Kragarm (3), ein Parallelarm (23), ein Führungsarm (4) und ein Teilstück eines Querträgers (2) einen Parallel-Kurbeltrieb bilden,
wobei der Kragarm (3) mit seinem einen Ende drehbar um die Säulenachse gelagert ist und zu seiner Verschwenkung um die Säulenachse mit einem Antrieb (30,31,32) gekuppelt ist,
der Parallelarm (23) mit seinem einen Ende um die Säulenachse drehbar gelagert ist, durch eine an der Säulenlagerstelle (33) angeordnete Festklemmvorrichtung (36,37,38,39,44-48) bezüglich der Säule (1) festklemmbar ist und mit seinem anderen Ende gelenkig mit einem Ende des Führungsarmes (4) verbunden ist, welcher parallel zum Kragarm (3) verläuft,
der Querträger (2) parallel zum Parallelarm (23) verläuft, mit den jeweils anderen Enden des Kragarmes (3) und des Führungsarmes (4) verbunden ist und an den Verbindungsstellen derart schwenkbar gelagert ist, daß er in einer horizontalen, senkrecht zur Säulenachse verlaufenden Ebene verstellbar ist,
und der Querträger (2) einen säulennahen, parallel zur Säule (1) verlaufenden Meßträgerstab (13) trägt, welcher durch einen Motor über eine Drehlagerung (15,16,18,19) in einer vertikalen, parallel zur Säule verlaufenden Richtung verstellbar ist, und einen säulenfernen, parallel zur Säule (1) verlaufenden Meßträgerstab (14) trägt, welcher durch Motoren sowohl in einer vertikalen, parallel zur Säule (1) verlaufenden Richtung, als auch in einer horizontalen, senkrecht zur Säulenachse verlaufenden Richtung verstellbar ist.

2. Vorrichtung nach Anspruch 1, gekennzeichnet durch eine Gewindespindel (10) parallel zum Querträger (2) zwecks Antrieb einer Halterung (26) für den säulenfernen Meßträgerstab (14) über eine Verschiebe- (11, 12, 21) und Drehlagerung von einer Halteplatte (17) für den säulennahen Meßträgerstab (13) aus.

## Claims

1. Measuring device for measuring the diameter of cylinders of roll grinding machines, wherein a perpendicular column (1) carries a cantilever (3) which is pivotable around the longitudinal axis of said column,
**characterised in that**
the cantilever (3), a parallel arm (23), a guide arm (4) and a section of a transverse support (2) form a parallel crank assembly,
wherein the cantilever (3) is mounted with its one end being rotatable around the column axis and coupled to a drive (30, 31, 32) for pivoting around the column axis,
the parallel arm (23) is mounted with its one end being rotatable around the column axis, that it is clamped relative to the column (1) by means of a clamping mechanism (36, 37, 38, 39, 44-48) arranged on the column mounting location (33), and that it is with its other end hingedly connected to one end of the guide arm (4) which extends parallel with the cantilever (3),
the transverse support (2) extends parallel with the parallel arm (23), that it is connected to the respective other ends of the cantilever (3) and the guide arm (4) and pivotably mounted on the connecting locations in such a manner that it is adjustable in a plane extending horizontally, perpendicularly to the column axis,
the transverse support (2) carries a measuring rod (13) near the column, which extends parallel to the column (1) and which is adjustable by means of a motor via a rotary mount (15, 16, 18, 19) in a perpendicular direction extending parallel to the column, and that it carries a measuring rod (14) remote from the column and extending parallel to the column (1), which is adjustable by a motor both in a perpendicular direction extending parallel to the column (1) and in a horizontal direction extending perpendicularly to the column axis.

2. Device according to claim 1, **characterised by** a threaded spindle (10) parallel to the transverse support (2) for driving a support (26) for the measuring rod (14) remote from the column via a displacement (11, 12, 21) and rotary mount of a carrier plate (17) for the measuring rod (17) near the column.

## Revendications

1. Dispositif de mesure, permettant de mesurer les diamètres de cylindres dans des machines à rectifier les cylindres, dans lequel une colonne verticale (1) porte un bras en porte-à-faux (3) agencé de façon à pouvoir pivoter autour de l'axe longitudinal de la colonne (1), caractérisé en ce que le bras en porte-à-faux (3), un bras de parallélisme (23), un bras de guidage (4) et une porton d'une traverse (2) constituent un mécanisme à bielle et manivelle à parallélogramme articulé, le bras en porte-à-faux (3) étant monté rotatif par une première extrémité autour de l'axe de la colonne et étant accouplé à un entraînement (30 ,31, 32) en vue de son pivotement autour de l'axe de la colonne, en ce que le bras de parallélisme (23) est monté rotatif par une première extrémité autour de l'axe de la colonne, est agencé de façon à pouvoir être immobilisé par serrage vis-à-vis de la colonne (1) au moyen d'un dispositif d'immobilisation par serrage (36, 37, 38, 39, 44-48) disposé sur un emplacement de montage à rotation (33) de la colonne et est relié d'une manière articulée, par son autre extrémité, à une extrémité du bras de guidage (4) qui s'étend parallèlement au bras en porte-à-faux (3), en ce que la traverse (2) s'étend parallèlement au bras de parallélisme (23), est reliée à l'autre extrémité du bras en porte-à-faux (3) et à celle du bras de guidage (4) et est monté de façon à pouvoir pivoter sur des emplacements de jonction, de façon que sa position puisse être réglée dans un plan horizontal s'étendant perpendiculairement à l'axe de la colonne et en ce que la traverse (2) porte une barre de support d'organe de mesure (13) proche de la colonne, qui s'étend parallèlement à la colonne (1) et dont la position peut être réglée, au moyen d'un moteur et par l'intermédiaire d'un montage rotatif (15, 16, 18, 19), dans une direction verticale s'étendant parallèlement à la colonne, et une tige de support d'organe de mesure (14) éloignée de la colonne, qui s'étend parallèlement à la colonne (1) et dont la position peut être réglée au moyen de moteurs, aussi bien dans une direction verticale s'étendant parallèlement à la colonne (1) que dans une direction horizontale s'étendant perpendiculairement à l'axe de la colonne.

2. Dispositif suivant la revendication 1, caractérisé par une tige filetée (10) disposée parallèlement à la traverse (2) et servant à l'entraînement d'un support (26) de la barre de support d'organe de mesure (14) éloignée de la colonne, par l'intermédiaire d'un montage coulissant (11, 12, 21) et rotatif, cet entraînement s'effectuant à partir d'une plaque (17) de support de la barre de support d'organe de mesure (13) proche de la colonne.
